## Europäisches Patentamt
## European Patent Office
## Office européen des brevets

(19)

(11) Veröffentlichungsnummer: **0 117 484**
**B1**

(12) # EUROPÄISCHE PATENTSCHRIFT

(45) Veröffentlichungstag der Patentschrift:
**18.02.87**

(51) Int. Cl.⁴: **C 03 C 11/00,** B 01 D 39/20,
C 04 B 38/04

(21) Anmeldenummer: **84101582.9**

(22) Anmeldetag: **16.02.84**

(54) **Posöses Sinterglass mit grossem offenem Porenvolumen.**

(30) Priorität: **19.02.83 DE 3305854**

(43) Veröffentlichungstag der Anmeldung:
**05.09.84 Patentblatt 84/36**

(45) Bekanntmachung des Hinweises auf die Patenterteilung:
**18.02.87 Patentblatt 87/8**

(84) Benannte Vertragsstaaten:
**AT BE CH DE FR GB IT LI LU NL SE**

(56) Entgegenhaltungen:
**CH - A - 286 042**
**US - A - 2 209 163**
**US - A - 3 421 914**

(73) Patentinhaber: **Schott Glaswerke,
Hattenbergstrasse 10, D-6500 Mainz (DE)**
(84) Benannte Vertragsstaaten: **BE CH DE FR IT LI LU NL SE
AT**

(73) Patentinhaber: **Carl-Zeiss-Stiftung trading as SCHOTT
GLASWERKE, Hattenbergstrasse 10,
D-6500 Mainz 1 (DE)**
(84) Benannte Vertragsstaaten: **GB**

(72) Erfinder: **Kiefer, Werner, Dr., Jupiterweg 19,
D-6500 Mainz-Finthen (DE)**
Erfinder: **Sura, Maria, Hermannstrasse 3,
D-6507 Ingelheim (DE)**

(74) Vertreter: **Rasper, Joachim, Dr., Bierstadter Höhe 22,
D-6200 Wiesbaden (DE)**

## Beschreibung

Die Erfindung betrifft ein Verfahren zur Herstellung von porösen Sinterformkörpern mit grossem offenem Porenvolumen und genau definierten Porendurchmessern, wobei gleichzeitig die Möglichkeit zur Eigenschaftssteuerung des Sintergerüstmaterials über Ionenaustausch während des Sintervorgangs besteht.

Ein bekanntes Verfahren zur Herstellung eines porösen Sinterglaskörpers mit offenen Poren besteht darin, dass gemahlenes Glas bestimmter Korngrösse in einer Form so hoch erhitzt wird, dass die Glaskörner erweichen und an den Berührungsflächen miteinander versintern. Solche Sinterglaskörper werden hauptsächlich als Filter verwendet. Durch Auswahl der Korngrösse des Glases lassen sich Filter mit definierten Durchgängen herstellen; z.B. Filter mit Durchgängen von 10–16 µm bzw. Filter mit Durchgängen von 160–250 µm. Die Dichte und somit das offene Porenvolumen dieser Sinterglaskörper wird im wesentlichen durch das Schüttgewicht des Glaspulvers bestimmt. Mit diesem Sinterverfahren lassen sich offene Porenvolumina von über 35% nicht erreichen.

Für die Herstellung von offenporigen Sinterkeramikkörpern sind eine Reihe von Verfahren bekannt, die davon ausgehen, dass dem Sinterkeramikpulver organische Substanzen zugemischt werden. Das Sinterkeramikpulver besteht im allgemeinen aus gemahlenem kristallinen Pulver mit einer geringen Menge an Glaspulver. Während des Aufheizprozesses werden die organischen Substanzen ausgebrannt, und es entstehen zusätzliche Hohlräume. Das beigefügte Glaspulver sorgt für die Verbindungsfestigkeit.

Wird bei diesem Verfahren kein kristallines, keramisches Material eingeführt, sondern nur von dem Glaspulver ausgegangen, dann werden entweder nur Artikel geringer Festigkeit oder Artikel mit geringem Porenvolumen erhalten. Da im allgemeinen die organischen Substanzen vor Erreichen der Sintertemperatur ausbrennen, muss bei Anwesenheit von nur glasigem Material die Versinterung bei relativ niedrigen Temperaturen erfolgen, da bei höheren Sintertemperaturen, d.h. nach Ausbrennen des Füllstoffes, das Glas zusammenschrumpft. Das Glaspulver mit grösseren Zwischenräumen ergibt bei den niedrigen Sintertemperaturen jedoch keine ausreichende Festigkeit. Dieses Verfahren ist für die Herstellung von porösen Glaskörpern mit grossem offenem Porenvolumen schlecht geeignet.

Es sind weitere Verfahren bekannt, die die Herstellung von hochporösen Glaskörpern zum Inhalt haben. Bei diesen Verfahren werden dem Glaspulver oder der Glasschmelze Schaummittel, wie z.B. SiC, zugegeben, die bei höheren Temperaturen das zähflüssige Glas aufschäumen. Bei diesen Verfahren muss die Temperatur so geführt werden, dass das Glas zwar aufschäumt, die in dem Glas entstehenden Gase aber nicht entweichen, da sonst das aufgeschäumte Glas wieder in sich zusammenfallen würde. Diese so hergestellten Schaumgläser weisen ein hohes Porenvolumen auf, besitzen jedoch praktisch keine offenen Poren und werden daher z.B. als Wärmeisolatoren eingesetzt.

In dem US-Patent 1 515 653 wird ein Verfahren zur Herstellung von Glasschaum aus Glasfasern beschrieben. Hierzu werden die Glasfasern an ihren Berührungspunkten versintert. Um zu vermeiden, dass die lockere Struktur der Glaswolle verlorengeht, wird der Hohlraum zwischen den Glasfasern durch die etwa 20-fache Menge an einem inerten Material ausgefüllt, das leichter schmilzt als das Glas und bei tiefen Temperaturen ausgelaugt werden kann. Als inertes Material werden Salze vorgeschlagen. Dieses Verfahren ist jedoch nicht geeignet einen offenporigen Körper mit definierten Porengrössen herzustellen.

Die US-A-2 209 163 beschreibt ein Verfahren zur Herstellung von hochporösen und schallschluckenden Sinterkörpern. Dazu wird silicatisches Material (Sand, Feldspat und Quarz, bevorzugt jedoch Material vulkanischen Ursprungs, wie Bimsstein und Obsidian) in Form von gemahlenem Pulver mit einer Körnung von 75–600 µm mit einem wasserlöslichen inerten Material (bevorzugt Salz) mit einer Körnung um 2000 µm und einem höheren Schmelzpunkt als die Sintertemperatur des silicatischen Materials gemischt sowie mit einem Binde- oder Flussmittel (bevorzugt NaOH, aber auch kalzinierte Soda, Nasilicate und Borax). Das Gemisch wird anschliessend unter kontrollierten Bedingungen gebrannt. Danach wird das versinterte Material abgekühlt und das inerte Material herausgelöst.

Die US-A-3 421 914 beschreibt ein Verfahren zur Herstellung von porösem, hochfeuerfestem Sintermaterial. Zirkonoxid wird in Form von gemahlenem Pulver mit einer Körnung von 50 µm bis 150 µm mit einem säurelöslichen feuerfesten Material (MgO, CaO) mit einer Körnung von 250 µm bis 2000 µm und einem höheren Schmelzpunkt als die Sintertemperatur sowie mit einem Stabilisator (CaO, $CaN_2$) mit einer Körnung von 75 µm bis 150 µm gemischt und versintert. Danach wird das Material abgekühlt und das inerte Material ausgelaugt.

Ziel der Erfindung ist ein Verfahren zur Herstellung von offenporigen Sinterformkörpern, mit grossem offenem Porenvolumen und genau definierten Porendurchmessern, wobei gleichzeitig die Möglichkeit zur Eigenschaftssteuerung des Sintergerüstmaterials über Ionenaustausch während des Sintervorgangs besteht. Dieses Ziel wird mit einem Verfahren gemäss den Patentansprüchen gelöst.

Das erfindungsgemässe Verfahren beruht darauf, dass das spätere Porenvolumen und die späteren Porengrössen des Sinterkörpers durch das Verhältnis von Sintermaterial zu löslicher Substanz und durch die Körnung der löslichen Substanz festgelegt werden können. Da die lösliche Substanz einen Schmelzpunkt besitzt, der höher liegt als die Sintertemperatur des Sintermaterials, verändert sich das von ihr eingenommene Volumen weder beim Aufheiz- noch beim Sinterprozess.

Dadurch, dass das von der löslichen Substanz eingenommene Volumen sich während dem Sintervorgang nicht ändert, stellt das von der löslichen Substanz eingenommene Volumen das minimale Porenvolumen dar. Dieses minimale Porenvolumen ist von der Sinterzeit und der Sintertemperatur unabhängig solange die Sintertemperatur unterhalb der Schmelztemperatur der löslichen Substanz bleibt. Die Höhe der Schrumpfung des Formkörpers während des Sintervorgangs hängt ausschliesslich von der Schrumpfung des Sintermaterials ab. Je geringer das Verhältnis Sintermaterial:lösliche Substanz ist, umso geringer ist die mögliche Schrumpfung. Da eine intensive Versinterung die Festigkeit des Sinterkörpers erhöht, wird eine vollständige Versinterung der Sintermasse durch Verlängerung der Sinterzeit und/oder Erhöhung der Sintertemperatur angestrebt.

Als Sintermaterial sind alle Materialien aus Glas und/oder Glaskeramik geeignet, die bei höheren Temperaturen versintern.

Für Gläser bzw. Gemische mit Glasanteil reichen bei längeren Sinterzeiten bereits Sintertemperaturen von 50 bis 100 K oberhalb der Transformationstemperatur des Glases aus. Besser sind jedoch Temperaturen um die Erweichungstemperatur (Ew) des Glases, da hierbei die Sinterzeiten wesentlich verkürzt werden können. Aber auch Sintertemperaturen zwischen Ew und der Verarbeitungstemperatur ($V_A$) sind bei diesem Verfahren möglich. Der grosse Spielraum in der Sintertemperatur kann beispielsweise für stark zur Kristallisation neigende Gläser von Bedeutung sein.

Bei gleichem Ausgangsgewicht ist die benötigte Sinterzeit abhängig von der Sintertemperatur und der Dicke der Probe. Je tiefer die Sintertemperatur liegt, um so länger muss die Sinterzeit sein. Im Gegensatz zu den bisher bekannten Verfahren bei Gläsern ist die Sinterzeit nach oben nicht so eng begrenzt, es sei denn aus ökonomischen Gründen oder weil die verwendeten Gläser zur Kristallisation oder Entmischung neigen. Falls Kristallisation oder Entmischung unerwünscht sind, was nicht immer der Fall sein muss, dann muss eine andere Sintertemperatur und/oder Sinterzeit gewählt werden.

Eine gleichmässige und gleichförmige Porenverteilung wird durch eine gleichmässige Vermischung von herauszulösender Substanz und Sintermaterial erreicht. Die Durchmischung kann im trockenen Zustand erfolgen. Ein Trocknen entfällt und die Mischung kann zum Sintern direkt in einen Ofen, der sich auf Sintertemperatur befindet, eingeführt werden.

Das Porenvolumen kann durch die Wahl des Verhältnisses Sintermaterial zu löslicher Substanz eingestellt werden. Geringe Mengen an löslicher Substanz, z.B. ≤ 20 Volumen % ergeben gegenüber normalen Sinterkörpern, die nur durch Versintern der Sintermasse ohne Zusatzstoffe hergestellt werden, keine wesentliche Erhöhung des Porenvolumens. Bei weniger als 10 Vol.% löslicher Substanz ist nicht mehr sichergestellt, dass die lösliche Substanz vollständig aus dem Sinterkörper herausgelöst werden kann, da die Körner der löslichen Substanz z.T. vollständig von dem Sintermaterial umgeben und somit eingeschmolzen werden.

Offene Porenvolumina von 40 bis 85 Vol.% können noch mit Salzkörnungen von ≤ 200 µm Durchmesser und einem Salzanteil von ≤ 65 Vol.% erzielt werden. Für offene Porenvolumina von > 85 Vol.% müssen Salzkörnungen von > 200 µm bis einige mm Durchmesser eingesetzt werden.

Mit zunehmender Korngrösse der löslichen Substanz entstehen nach dem Auslaugen grössere Hohlräume, die durch engere Kanäle miteinander verbunden sind.

Als besonders vorteilhaft hat sich ein Anteil aus löslicher Substanz von 30 bis 70 Vol.% erwiesen.

Es hat sich als vorteilhaft erwiesen, dass die Korngrösse des Sintermaterials stets kleiner oder gleich gross wie die Korngrösse der löslichen Substanz. Es hat sich gezeigt, dass die Festigkeit der Sinterkörper um so höher wird, je kleiner die Korngrösse des Sintermaterials ist. Für die Sinterkörper mit unterschiedlichen Porengrössen kann ein Sintermaterial einheitlicher Körnung eingesetzt werden. Hierdurch wird ein Aussieben des Sintermaterials nach verschiedenen Fraktionen überflüssig. Die Körnung des Sintermaterials sollte < 50 µm, vorzugsweise < 20 µm sein.

Nach dem beanspruchten Verfahren lässt sich die Porengrösse des Sinterkörpers einstellen durch die Korngrösse der löslichen Substanz und/oder durch das Verhältnis Sintermaterial zu löslicher Substanz.

Für die Messung der Porengrösse stehen mehrere Verfahren zur Verfügung. Zur Bestimmung der Porengrösse von Filtern mit Porenweiten von 1 bis 500 µm wird meistens das Blasendruckverfahren nach Bechtold angewandt (Literatur: Frank W.: GIT 11 (1967), Heft 7, S. 663–688).

Es hat sich gezeigt, dass die Korngrösse der löslichen Substanz gleich gross oder grösser sein muss als die angestrebte Porenweite, gemessen nach der o.g. Methode. Je geringer der Anteil der löslichen Substanz ist, je kleiner wird die gemessene Porenweite. Dies ist darauf zurückzuführen, dass bei einem hohen Anteil an Sintermaterial die Körner der löslichen Substanz von dem Sintermaterial weitgehend umgeben sind. Nach dem beanspruchten Verfahren werden Porengrössen zwischen 1 und 500 µm, vorzugsweise zwischen 10 und 200 µm, angestrebt. Hierzu sind Körnungen der löslichen Substanz von etwa 1 µm bis wenige mm, vorzugsweise von 1 bis 500 µm nötig.

Als lösliche Substanz, deren Schmelztemperatur höher liegt als die Sintertemperatur des Sintermaterials, und die sich bei Temperaturen unterhalb der Sintertemperatur aus dem Mischkörper herausgelöst werden kann, bieten sich vorzugsweise anorganische Salze an.

Neben einer hohen Schmelztemperatur müssen die löslichen Substanzen auch eine gute Löslichkeit aufweisen. Die Löslichkeit ist jedoch nicht auf die Löslichkeit in wässrigen Lösungen wie Wasser, Säuren oder Laugen beschränkt. Als Lösungsmittel können auch Salzschmelzen oder Gemische von geschmolzenen Salzen dienen.

Zu den löslichen Substanzen, die die beschriebenen Eigenschaften aufweisen, gehören beispielsweise Halogenide, Sulfate, Sulfide, Carbonate, Phosphate, Chromate, Wolframate, Aluminate, Silikate und Zirkonate. Als besonders günstig und preiswert haben sich für Gläser die Alkali- und Erdalkali-Chloride und -Sulfate erwiesen, wie z.B. NaCl, $Na_2SO_4$ und $K_2SO_4$.

Aus Kostengründen kommt als Lösungsmittel in erster Linie Wasser in Frage. Um die Umwelt nicht mit Abfallprodukten zu belasten, kann z.B. das Auslaugen durch Extraktion im Rückfluss erfolgen. Dieses Verfahren hat den Vorteil, dass die Extraktion stets mit heissem, frischem Lösungsmittel erfolgen kann. Aus der Lösung fällt z.B. das Salz bei Überschreiten des Löslichkeitsprodukts wieder aus und kann durch Abfiltrieren zurückgewonnen werden. Durch Umkristallisieren bzw. durch gezieltes Auskristallisieren lässt sich Salz in der gewünschten Körnung herstellen.

Das Auslaugen der löslichen Substanz kann auch durch Ultraschall beschleunigt werden.

Nach dem beanspruchten Verfahren muss der Ionenaustausch zwischen dem Sintermaterial und der löslichen Substanz stets berücksichtigt werden, da bei der Sintertemperatur einige Ionen im Sintermaterial bereits eine erhebliche Diffusionsgeschwindigkeit besitzen können. So findet beispielsweise zwischen einem Na-haltigen Glas und Kaliumsulfat bei der Sintertemperatur des Glases ein Natrium-Kalium-Austausch statt. Durch die Wahl des Sintermaterials und/oder der löslichen Substanz werden während des Sintervorganges die Eigenschaften des Sintermaterials durch Ionenaustausch verbessert. Durch Ionenaustausch beim Sintervorgang kann z.B. die Phasenstabilität eines Glases erhöht, die Neigung zur Oberflächenkristallisation eines Glases erniedrigt oder ein Glas in die Kristallphase überführt werden.

Wie bereits erwähnt kann das Gemisch aus Sintermaterial und löslicher Substanz ohne weitere Zusätze langsam oder rasch auf die Sintertemperatur erhitzt werden. Es hat sich als vorteilhaft erwiesen, dass die Versinterung unter Druck erfolgt. Da bei dem Verfahren nur eine geringe Schrumpfung des Sinterkörpers stattfindet, kann z.B. ein Gemisch aus glasigem Sintermaterial und löslicher Substanz während der Sinterung direkt mit dem festen Glaskörper verschmolzen werden.

Nach dem beanspruchten Verfahren ist es auch möglich, dem Gemisch aus Sintermaterial und löslicher Substanz ein Plastifizierungsmittel, wie sie in der Keramikindustrie verwendet werden, zuzugeben. Diese Mischung muss gründlich gemischt und geknetet werden, bevor die Masse einer Formgebung unterworfen wird. Die Formgebung kann durch die in der Keramikindustrie üblichen Verfahren, wie z.B. Verpressen, Strangpressen oder Walzen, erfolgen. Nach der Formgebung muss die plastifizierte Masse getrocknet werden. Vorhandene organische Bestandteile werden durch langsames Aufheizen oder durch Einhaltung einer Temperstufe unterhalb 500 °C verbrannt, da sie sonst zu einem Aufblähen des Sinterkörpers führen würden. Falls jedoch ein solches Aufblähen erwünscht ist, kann dies durch geeignete Temperung erfolgen.

Besonders in der Filtertechnik ist es wünschenswert, neben einem hohen Abscheidungsgrad eine hohe Durchflussgeschwindigkeit zu erhalten. Erfindungsgemäss wird dies bereits durch das grosse offene Porenvolumen erreicht. Die Durchflussgeschwindigkeit kann jedoch durch die Herstellung eines Schichtfilters noch weiter gesteigert werden. Der Schichtfilter kann z.B. aus einer dickeren Trägerschicht und einer dünnen Trennschicht bestehen. Die Trägerschicht besteht aus einem Sinterkörper mit grossem offenem Porenvolumen und relativ weiten Porendurchmessern, d.h. das Verhältnis Sintermaterial/lösliche Substanz wird klein und die Körnung der löslichen Substanz relativ gross gewählt. Bei der Trennschicht liegen die Verhältnisse umgekehrt. Um eine gute Trennwirkung zu erhalten, muss der Porendurchmesser möglichst klein sein; hierzu wird das Verhältnis von Sintermaterial/lösliche Substanz gross und/oder die Körnung der löslichen Substanz klein gewählt.

Es hat sich gezeigt, dass das erfindungsgemässe Verfahren für die Herstellung von Schichtfiltern besonders gut geeignet ist. Zum einen wird durch die lösliche Substanz die beim Sintern normalerweise auftretende Schrumpfung sehr stark vermindert, zum anderen lassen sich die unterschiedlichen Schrumpfungen, die normalerweise beim Versintern von Körpern unterschiedlicher Körnung auftreten, durch das Aufbringen eines Druckes vermeiden. Der Druck ermöglicht ein gewisses Fliessen, ohne dass die Porenvolumen oder die Porendurchmesser wesentlich verändert werden.

Das erfindungsgemässe Verfahren ist jedoch nicht auf die Herstellung von flachen Schichtfiltern beschränkt. Auch Formkörper, die aus einem Gemisch aus Sintermaterial, löslicher Substanz und Plastifizierungsmittel hergestellt wurden, können nach dem Trockenvorgang mit einem zweiten Gemisch, das ebenfalls aus Sintermaterial, löslicher Substanz und Plastifizierungsmittel besteht, bei dem jedoch das Verhältnis Sintermaterial:löslicher Substanz und/oder die Körnung der löslichen Substanz unterschiedlich ist, Schichtfilter ergeben. Das zweite Gemisch kann z.B. durch Tauchen, Sprühen oder Bestreichen aufgebracht werden. Zum Aufbringen sehr dünner Schichten eignen sich auch dünne Folien, die nach dem Siebdruckverfahren hergestellt werden und nach der Methode der Abziehbilder aufgebracht werden.

Das erfindungsgemässe Verfahren besitzt gegenüber den bisher bekannten Verfahren eine Reihe von wesentlichen Vorteilen.

Gegenüber dem bekannten Verfahren zur Herstellung von Sinterkörpern aus pulverförmigem Sintermaterial hat es unter anderem die folgenden Vorteile. Durch die Einführung der löslichen Substanz lässt sich ein grosses offenes Porenvolumen bei genauer Einstellung der Porendurchmesser erreichen, dies bedingt eine wesentlich höhere Durchlaufgeschwindigkeit bei gleicher Trennschärfe bzw. höhere Trennschärfe bei gleicher Durchlaufgeschwindigkeit. Darüber hinaus ist das Verfahren in der Praxis wesentlich einfacher zu handhaben, da auf Flussmittel und Stabilisatoren verzichtet werden kann und geringe Schwankungen in der Sinterzeit und Sintertemperatur keinen Einfluss auf die Qualität des Endproduktes besitzen. Die Eigenschaften der Sintergerüstmaterialien können durch Ionenaustausch während des Sintervorgangs durch geeignete Wahl von Sintermaterial und/oder löslicher Substanz gesteuert werden.

Gegenüber den Verfahren mit den organischen Füllstoffen hat das erfindungsgemässe Verfahren den Vorteil, dass ein Ausbrennen der organischen Stoffe, die wie z.B. das Styropor sehr umweltschädlich sind, entfällt. Der Aufheizprozess kann hierdurch wesentlich beschleunigt werden. Die organischen Füllstoffe haben darüber hinaus noch den Nachteil, dass sie für Glassinterkörper ungeeignet sind, da das Glas nach dem Ausbrennen der organischen Stoffe beim Sintern zusammenschrumpft.

Die Vorteile des erfindungsgemässen Verfahrens liegen in der Herstellung eines grossen offenen Porenvolumens, der genauen Einstellung der Porendurchmesser, der einfachen und flexiblen Fertigung sowie einer gezielten Eigenschaftssteuern des Sintergerüstmaterials. Hierdurch werden unter anderem folgende Eigenschaften der Sinterkörper wesentlich verbessert:
– hohe Durchlaufgeschwindigkeit,
– hohe Trennschärfe,
– geringe Dichte,
– hohe mechanische Festigkeit,
– gute mechanische Bearbeitbarkeit,
– hohe Saugfähigkeit,
– hohe Flüssigkeitsaufnahmefähigkeit.

Die nach dem erfindungsgemässen Verfahren hergestellten, hochporösen Sinterkörper eignen sich beispielsweise zum Filtrieren von Flüssigkeiten und Gasen zur Aufnahme von Flüssigkeiten, zur Aufnahme von Kunststoffen für Kunststoff-Glas-Verbund-Werkstoffe, zum Trennen von Emulsionen (Koagulieren), zum Überführen von Flüssigkeiten, Dämpfen und Gasen aus einem kalten in einen heissen Raum und als Trägermaterial von Katalysatoren.

Im folgenden wird das erfindungsgemässe Verfahren anhand einiger Beispiele erläutert.

Beispiel 1

In diesem Beispiel soll der Einfluss des Verhältnisses Sintermaterial/lösliche Substanz und der Körnung von Sintermaterial und löslicher Substanz auf die Dichte, das Porenvolumen, die Wasseraufnahmefähigkeit und die mechanische Festigkeit gezeigt werden.

Als Sintermaterial wird das bekannte Borosilicatglas DURAN" der Firma SCHOTT GLASWERKE (Typen-Nr. 8330) verwendet. Die Transformationstemperatur Tg dieses Glases liegt bei 530 °C, die Erweichungstemperatur Ew (Viskosität $\eta$ des Glases $10^{7,6}$ dPas) bei 815 °C und die Verarbeitungstemperatur $V_A$ ($\eta = 10^4$ dPas) bei 1270 °C. Die Dichte des Glases beträgt 2,23 g/cm³.

Als lösliche Substanz wurde Kaliumsulfat ($K_2SO_4$) eingesetzt. Das $K_2SO_4$ hat einen Schmelzpunkt von 1069 °C und eine Löslichkeit in Wasser von 10% bei 20 °C. Die mittlere Korngrösse des Glaspulvers und des Salzes gehen aus Tab. 1 hervor.

Tabelle 1
Mittlere Korngrösse von Glas und Salz

| Bezeichnung | | Korngrösse (µm) |
|---|---|---|
| Glas: | $D_0$ | 400–650 |
| | $D_1$ | 200–400 |
| | $D_2$ | 100–200 |
| | $D_3$ | 45–100 |
| | $D_4$ | 45 |
| Salz: | $K_1$ | 100–200 |
| | $K_2$ | 60–100 |
| | $K_3$ | 60 |

Die Körnungen $D_0$ bis $D_4$ werden auch zur Herstellung von Filterplatten verwendet. Die Sintertemperatur für die Filterherstellung liegt zwischen 750 und 850 °C je nach Korngrösse des Glaspulvers. Die Sintertemperatur des folgenden Versuches betrug stets 850 °C und die Sinterzeit 20 min. Die zu versinternden Proben wurden direkt in den heissen Ofen eingeführt. Die Sinterzeit wurde nach Erreichen der angestrebten Sintertemperatur gerechnet. Nach dem Sintern werden die Proben an Luft abgekühlt.

In der Tab. 2 sind in der ersten Spalte die Zusammensetzung in Volumenprozent und die Glasbzw. Salzkörnung angegeben. 50 $D_4$ 50 $K_1$ bedeutet 50 Vol.% Glaspulver der Körnung $D_4$ vermischt mit 50 Vol.% Salz der Körnung $K_1$. Es hat sich beispielsweise gezeigt, dass die Dichte von 0,35 g/cm³ mit dem feinen Glaspulver ($D_4$) und dem groben Salz ($K_1$) zu erzielen ist. Mit zunehmender Grösse der Glaskörnung oder mit abnehmender Grösse der Salzkörnung vermindert sich der Zusammenhalt.

Bei einem Salzanteil von = 20% kommt es bei der Sinterung zu einer erheblichen Schrumpfung. Diese Schrumpfung ist darauf zurückzuführen, dass die 20% Salz nicht ausreichen um alle Hohlräume auszufüllen. Das Glas schmilzt bei der relativ hohen Sintertemperatur zusammen. Die Wasseraufnahmefähigkeit stimmt im Rahmen der Messgenauigkeit mit der aus der Dichte berechneten Porosität überein. Es kann somit davon ausgegangen werden, dass alle Poren offen sind. Diese Annahme wird durch die Mikrosondeaufnahmen bestätigt. Die mechanische Festigkeit ist proportional der Dichte. Sie ist weitgehend unabhängig von der Korngrösse des Glases bzw. des Salzes.

Während des Sinterprozesses findet ein Ionenaustausch des im DURAN"-Glas enthaltenen Natriums gegen Kaliumionen aus dem porenbildenden Kaliumsulfat statt, wodurch die Phasenstabilität des Glases verbessert wird.

**Tabelle 2**
Zusammensetzung und Eigenschaften von Sinterglaskörpern

| Zusammensetzung % D | % K | Dichte [g/cm³] | Porosität berechnet | Porengrösse [µm] | Schrumpfung [%] | Wasseraufnahme [g/cm³] | [g/g] | Festigkeit [N/mm²] |
|---|---|---|---|---|---|---|---|---|
| 50 D$_4$ | 50 K$_1$ | 0,57 | 74,4 | | | | | |
| 50 D$_4$ | 50 K$_1$ | 0,55 | 75,3 | | | | | 4,05 |
| 40 D$_4$ | 60 K$_1$ | 0,40 | 82,1 | 70–100 | 0 | 0,78 | 1,90 | |
| 40 D$_4$ | 60 K$_2$ | 0,34 | 84,8 | 40– 70 | | 0,82 | 2,42 | |
| 35 D$_4$ | 65 K$_1$ | 0,35 | 84,4 | 70–100 | | 0,82 | 2,38 | 0,49 |
| 35 D$_4$ | 65 K$_2$ | | | | | | | |
| 80 D$_4$ | 20 K$_1$ | 1,21 | 45,7 | | 44 | 0,28 | 0,23 | |
| 80 D$_4$ | 20 K$_2$ | 1,08 | 51,5 | | 41 | 0,36 | 0,33 | 11,03 |
| 80 D$_4$ | 20 K$_3$ | 1,02 | 54,3 | | 37,5 | 0,38 | 0,37 | |
| 80 D$_3$ | 20 K$_1$ | 1,35 | 39,7 | | 24,9 | 0,28 | 0,21 | |
| 80 D$_3$ | 20 K$_2$ | 1,24 | 44,6 | | 20,1 | 0,37 | 0,30 | 9,31 |
| 80 D$_3$ | 20 K$_3$ | 1,29 | 42,1 | | 29,8 | 0,20 | 0,23 | 12,75 |
| 80 D$_2$ | 20 K$_1$ | 1,10 | 50,5 | | 4,8 | 0,32 | 0,29 | |
| 80 D$_2$ | 20 K$_2$ | 1,13 | 49,2 | | 6,2 | 0,48 | 0,42 | |
| 60 D$_4$ | 40 K$_1$ | 0,69 | 69,0 | | 15,5 | 0,63 | 0,91 | |
| 60 D$_4$ | 40 K$_2$ | 0,84 | 62,3 | | 17,5 | 0,60 | 0,71 | |
| 60 D$_4$ | 40 K$_3$ | 0,74 | 66,6 | | 24,1 | 0,59 | 0,80 | |
| 60 D$_3$ | 40 K$_1$ | 0,73 | 67,2 | | 0 | 0,59 | 0,81 | |
| 60 D$_3$ | 40 K$_2$ | 0,76 | 66,1 | | 9,6 | 0,56 | 0,74 | |
| 60 D$_3$ | 40 K$_3$ | 0,77 | 65,4 | | 9,4 | 0,64 | 0,83 | |
| 60 D$_2$ | 40 K$_1$ | 0,58 | 74,1 | | 0 | 0,57 | 0,98 | |
| 60 D$_2$ | 40 K$_2$ | | | | | | | |
| 60 D$_2$ | 40 K$_3$ | | | | | | | |

**Beispiel 2**

Das bei Herstellung von Glasfiltern nach der hierin beschriebenen Methode erreichbare höhere Porenvolumen bei unveränderter Porengrösse, erhöht die Durchlaufgeschwindigkeit bei unveränderter Trennschärfe im Vergleich mit herkömmlichen Filterfritten. Aus den in Tab. 3 zusammengestellten Messwerten für die Wasserdurchflussmenge ist ersichtlich, dass diese Werte etwa dem zwei- bis vierfachen Wert des in klassischen Filterfritten vergleichbarer Trennschärfe gemessenen entsprechen.

**Tabelle 3**

| Zusammensetzung % D | % K | Dichte [g/cm³] | Porendurchmesser [µm]* | Wasserdurchflussmenge [ml·sec$^{-1}$] | Wasseraufnahme [g/cm³] |
|---|---|---|---|---|---|
| 100 D$_1$ | 0 | 1,57 | 120 | 159 | 0,25 |
| 30 D$_4$ | 70 K$_1$ | 0,42 | 120 | 588 | 0,76 |
| 100 D$_2$ | 0 | 1,45 | 70 | 152 | 0,33 |
| 30 D$_4$ | 70 K$_2$ | 0,43 | 75 | 313 | 0,78 |
| 100 D$_2$ | 0 | 1,43 | 55 | 48 | 0,29 |
| 40 D$_4$ | 60 K$_2$ | 0,65 | 55 | 138 | 0,55 |
| 40 D$_4$ | 60 K$_3$ | 0,72 | 45 | 128 | 0,58 |

*) gemessen nach dem Blasendruckverfahren von Bechthold (Literatur: Frank W. GIT 11, 1967, Heft 7, S. 683–688)

**Beispiel 3**

Das beanspruchte Verfahren ist unabhängig von der Glaszusammensetzung. Um dies zu zeigen, sind in Tab. 4 sechs charakteristische technische Gläser ausgewählt. In der ersten Spalte sind die Typen-Nummern der Gläser angegeben, unter der diese Gläser (mit Ausnahme des Fensterglases) von der Firma SCHOTT im Handel angeboten werden. Das Glas 4210 ist ein hochalkalihaltiges Glas (25 Gew.% Alkalien) mit hoher Wärmeausdehnung. Das Fensterglas ist in seiner Zusammensetzung und seinen Eigenschaften bekannt (Natrium-Kalk-Silikat-Glas). Das gleiche gilt für das Glas 8330, bei dem es sich um das bekannte Laborglas DURAN" handelt. Dieses Borosilikatglas ist das Massenglas mit der niedrigsten Wärmeausdehnung. Das Glas 8337 ist ein hoch-Borsäure- ($\sim$ 25 Gew.% $B_2O_3$), das Glas 8409 ein hoch-Tonerde- (> 20 Gew.% $Al_2O_3$) und das Glas 8095 ein hoch-Blei-haltiges Glas (30 Gew.% PbO).

Als Salz wurde $K_2SO_4$ mit einer Körnung von 100 bis 200 µm verwendet. Die Mischung enthielt je 50 Vol.% Glaspulver und Salz. Die Sinterzeit wurde für alle Gläser konstant (20 min) gehalten und die Sintertemperatur der Glasart angepasst. Aus der Dichte des Glases und der Dichte des Sinterglaskörpers wurde das offene Porenvolumen berechnet. Dass die Wasseraufnahmefähigkeit mit dem offenen Porenvolumen nicht übereinstimmt, hängt mit der Grösse der Versuchsproben zusammen.

**Tabelle 4**
Sinterglaskörper aus verschiedenen Gläsern

| Glastyp | $\alpha$ $10^{-6}$ [$K^{-1}$] | Viskosität [dPas] | | | Dichte Glas [g/cm³] | Zu- sammen- setzung | Sinter- temperatur [°C] | Dichte Sinterglas [g/cm³] | Wasser- aufnahme [ml/cm³] | Poren- volumen [Vol.-%] |
|---|---|---|---|---|---|---|---|---|---|---|
| | | Tg [°C] | $10^{7,6}$ | $10^4$ | | | | | | |
| 4210 | 12,4 | 450 | 614 | 880 | 2,68 | 50:50 | 650 | 0,74 | 0,65 | 72,4 |
| Fensterglas | 9,0 | 550 | 730 | 1035 | 2,5 | 50:50 | 765 | 0,66 | 0,68 | 73,6 |
| 8330 | 3,25 | 530 | 815 | 1270 | 2,23 | 50:50 | 850 | 0,41 | 0,67 | 78,9 |
| 8337 | 4,1 | 438 | 695 | 1115 | 2,17 | 50:50 | 740 | 0,60 | 0,64 | 72,4 |
| 8409 | 4,1 | 730 | 950 | 1235 | 2,56 | 50:50 | 1000 | 0,82 | 0,54 | 68,0 |
| 8095 | 9,1 | 430 | 630 | 982 | 3,02 | 50:50 | 680 | 0,82 | 0,70 | 72,8 |

**Beispiel 4**

Nach dem beanspruchten Verfahren soll die Schmelztemperatur der löslichen Substanz höher liegen als die Temperatur, die zum Versintern des Gerüstmaterials benötigt wird. Darüber hinaus soll sie nach dem Sinterprozess aus dem Verbund herausgelöst werden können, ohne das gesinterte Gerüst zu zerstören.

Zur Prüfung des Verhaltens verschiedener Salze wurden Gemische aus 50 Vol.% 8330 bzw. Fensterglas der Körnung $D_4$ und 50 Vol.% der zu untersuchenden Salze hergestellt, 20 min bei 850°C bzw. 765°C getempert und nach dem Abkühlen der Proben das Salz in heissem Wasser herausgelöst. Die Tab. 5 zeigt die Zusammenstellung der Versuche.

**Tabelle 5**

| Glastyp | Salz | Sintertempe- ratur [°C] | Dichte Sinter- glas [g/cm³] | Wasseraufnah- me [ml/cm³] | Porenvolu- men [Vol. %] |
|---|---|---|---|---|---|
| Fensterglas | $Li_2SO_4$ | 765 | 0,73 | 0,52 | 70,8 |
| 8330 | $Na_2SO_4$ | 850 | 0,44 | 0,66 | 80,3 |
| 8330 | $K_2SO_4$ | 850 | 0,47 | 0,67 | 78,9 |
| 8330 | $MgSO_4$ | 850 | 0,64 | 0,55 | 70,9 |
| Fensterglas | NaCl | 765 | 0,64 | 0,61 | 74,4 |

Im zweiten ($8330 - Na_2SO_4$) und letzten (Fensterglas – NaCl) Beispiel der Tabelle wurde, im Gegensatz zu den restlichen Beispielen, kein Ionenaustausch festgestellt.

**Beispiel 5**
Herstellung eines offenporigen Sinterkörpers aus Glaskeramik

50 Vol.% CERADUR"-Pulver wurden mit 50 Vol.% Kaliumsulfat bei 1000°C 10 min versintert. Infolge des stattgefundenen Ionenaustausches enthielt das poröse Gerüst nach Herauslösen des löslichen Kaliumsulfats und Umwandlung Leucit ($KAlSi_2O_6$). 60 Gew.% CERADUR"-Pulver mit 15% Anteil Glas 8462 der Fa. SCHOTT GLASWERKE wurden mit 40% geschmolzenem und gezielt gekörntem (200–500 µm) Magnesiumsulfat mit 5% Lithiumsulfatanteil bei 1000°C versintert. Nach Herauslösen des Salzgemisches bestand das Gerüst aus Cordierit. Die Dichte betrug 0,97 g/cm³, die Wasseraufnahmefähigkeit 0,47 ml/cm³.

**Beispiel 6**
Plastifizierung des Sintermaterial-/lösliche Substanz-Gemisches

Ein Gemisch, bestehend aus 60 Gew.% DURAN"-Pulver der Körnung ≤ 40 µm und Kaliumsulfat der Körnung ≤ 120 µm wurde nach einer aus der Keramikindustrie bekannten Methode plastifiziert, wobei der Anteil an Plastifizierern etwa 25 Gew.% betrug. Die Formgebung konnte dann durch Extrudieren erfolgen. Die Eigenschaften entsprechen praktisch den in Tab. 2 angeführten.

**Beispiel 7**
Herstellung eines Schichtfilters

Ein Gemisch aus 40 Gew.% DURAN"-Pulver der Körnung < 20 µm und 60 Gew.% Kaliumsulfat der Körnung ≤ 40 µm wurde in Form unter Druck auf ca. 2 mm Dicke gepresst. Darüber wurde ein zweites Gemisch aus 40 Gew.% DURAN"-Pulver derselben Körnung und 60 Gew.% grobkörnigem (200–400 µm) Kaliumsulfat auf ca. 10 mm Dicke gepresst. Dieser Zweischichtenformkörper wurde unter Belastung (um eine Schichtverwerfung zu vermeiden) wie üblich versintert. Nach dem Herauslösen des Kaliumsalzes hatte der Verbund die Filtereigenschaften eines dünnschichtigen Feinfilters, aber die Festigkeit, die der dicken Zweitschicht mit groben Poren entspricht.

**Patentansprüche**

1. Verfahren zur Herstellung von porösen Sinterkörpern mit grossem offenen Porenvolumen und definierten Porendurchmessern, dadurch gekennzeichnet, dass Glas und/oder Glaskeramik in Form von feingemahlenem Pulver mit einer Körnung < 50 µm mit einem leicht löslichen, anorganischen Salz gemischt wird, das einen höheren Schmelzpunkt aufweist als die Sintertemperatur des Glases und/oder der Glaskeramik und das in Form von Pulver definierter Korngrösse vorliegt; wobei die Zusammensetzung des Glases und/oder der Glaskeramik und des löslichen Salzes so gewählt sind, dass während des Sinterprozesses ein intensiver Ionenaustausch zwischen dem Glas und/oder der Glaskeramik und dem löslichen Salz stattfindet und dass das Gemisch aus Glas und/oder Glaskeramik und löslichem Salz auf die Sintertemperatur erhitzt und dort so lange gehalten wird, bis das Glas und/oder das Glaskeramikpulver versintert ist, danach das versinterte Produkt abgekühlt und das lösliche Salz unterhalb der Sintertemperatur aus dem versinterten Produkt herausgelöst wird.

2. Verfahren nach Anspruch 1, dadurch gekennzeichnet, dass das offene Porenvolumen durch das Verhältnis Pulvermenge des Glases und/oder der Glaskeramik zur Pulvermenge des löslichen Salzes bestimmt wird, wobei das offene Porenvolumen in Volumen-% stets gleich gross oder grösser ist als die Pulvermenge des löslichen Salzes in Volumen-%.

3. Verfahren nach Anspruch 2, dadurch gekennzeichnet, dass das Verhältnis Pulvermenge des Glases und/oder der Glaskeramik zur Pulvermenge des löslichen Salzes zwischen 10 zu 1 und 1 zu 10, vorzugsweise zwischen 7 zu 3 und 3 zu 7 liegt.

4. Verfahren nach Anspruch 1 bis 3, dadurch gekennzeichnet, dass die Porengrösse von dem Verhältnis Pulvermenge Glas und/oder Glaskeramik/lösliches Salz und/oder von der Korngrösse des löslichen Salzes abhängt, wobei die Korngrösse des löslichen Salzes gleich gross oder grösser ist als die angestrebte Porengrösse.

5. Verfahren nach Anspruch 1 bis 4, dadurch gekennzeichnet, dass das Glas und/oder die Glaskeramik eine kleinere oder gleich grosse Körnung aufweist wie das lösliche Salz.

6. Verfahren nach Anspruch 5, dadurch gekennzeichnet, dass die Körnung des Glases und/oder der Glaskeramik vorzugsweise < 20 µm ist.

7. Verfahren nach Anspruch 1 bis 6, dadurch gekennzeichnet, dass die Korngrösse des löslichen Salzes je nach anzustrebender Porengrösse in ihrer Hauptmenge zwischen 1 µm und wenigen mm liegt.

8. Verfahren nach Anspruch 1 bis 7, dadurch gekennzeichnet, dass als lösliche, anorganische Salze vorzugsweise Alkali- oder Erdalkalichloride, -sulfate oder -carbonate verwendet werden.

9. Verfahren nach Anspruch 1 bis 8, dadurch gekennzeichnet, dass als lösliche Salze solche Stoffe verwendet werden, die sich in wässrigen Lösungen, Säuren, Laugen oder geschmolzenen Salzen lösen.

10. Verfahren nach Anspruch 1 bis 9, dadurch gekennzeichnet, dass die Zusammensetzung des Glases und/oder der Glaskeramik und des löslichen Salzes so gewählt sind, dass während dem Sinterprozess kein oder nur ein geringer Ionenaustausch zwischen dem Glas und/oder der Glaskeramik und dem löslichen Salz stattfindet.

11. Verfahren nach Anspruch 1 bis 10, dadurch gekennzeichnet, dass dem Gemisch aus Glas und/oder Glaskeramik und löslichem Salz ein Plastifizierungsmittel zugegeben, die gesamte Mischung in einem Kneter geknetet, die entstehende plastische Masse einer Formgebung unterworfen und anschliessend getrocknet wird, bevor die Sinterung erfolgt.

12. Verfahren nach Anspruch 11, dadurch gekennzeichnet, dass die Formgebung durch Formpressen, Walzen oder Strangpressen erfolgt.

13. Verfahren nach Anspruch 1 bis 12, dadurch gekennzeichnet, dass zwei oder mehrere Gemische mit unterschiedlichem Verhältnis von Glas und/oder Glaskeramik zu löslichem Salz und/oder unterschiedlichen Körnungen des löslichen Salzes miteinander gesintert werden, so dass Schichtkörper entstehen, wobei sich die Schichten durch unterschiedliches Porenvolumen und/oder Porengrösse unterscheiden.

14. Verfahren nach Anspruch 11 und 12, dadurch gekennzeichnet, dass nach der Formgebung und nach dem Trocknen, aber vor dem Sintern, der Formkörper mit einer Masse, bestehend aus Glas und/oder Glaskeramik, löslichem Salz und Plastifizierungsmittel beschichtet wird, wobei sich die Beschichtungsmasse von der Masse des Formkörpers in bezug auf das Verhältnis zwischen Glas und/oder Glaskeramik und löslichem Salz im Gemisch und/oder in bezug auf die Körnung des löslichen Salzes unterscheidet.

15. Verfahren nach Anspruch 14, dadurch gekennzeichnet, dass die Beschichtung nach dem Trocknen der Formkörper und vor dem Sintern durch Eintauchen, Sprühen, Bestreichen oder durch Aufbringen einer vorgefertigten Folie erfolgt.

16. Verfahren nach Anspruch 1–15, dadurch gekennzeichnet, dass die Versinterung unter Druck erfolgt.

**Claims**

1. A process for producing porous sintered bodies having a large open pore volume and definite pore sizes, characterized in that glass and/or glass ceramic which is present as a finely ground powder of a particle size of < 50 µm is mixed with

an easily soluble inorganic salt, the said salt having a melting point which is higher than the sintering temperature of the glass and/or the glass ceramic and being present as a powder of definite particle size, the composition of the glass and of the glass ceramic and of the soluble salt being chosen such that during the sintering process an intensive ion exchange takes place between the glass and or the glass ceramic and the soluble salt, further characterized in that the mixture of glass and/or glass ceramic and soluble salt is being heated to the sintering temperature and is kept at this temperature until the glass and/or glass ceramic is sintered together, whereafter the sintered product is being cooled and the soluble salt is being leached out of the sintered product at a temperature below the sintering temperature.

2. The process according to claim 1, characterized in that the open pore volume is determined by the ratio of the amount of glass powder and/or glass ceramic powder to the amount of soluble salt powder, the open pore volume, calculated as volume percent, being always as large or larger than amount of soluble salt powder, calculated as volume percent.

3. The process according to claim 2, characterized in that the ratio of the amount of glass powder and/or glass ceramic powder to the amount of soluble salt powder is between 10 to 1 and 1 to 10, preferably between 7 to 3 and 3 to 7.

4. The process according to claims 1 to 3, characterized in that the pore size depends from the ratio of the amount of glass powder and/or glass ceramic powder to the amount of soluble salt, and or depends from the particle size of the soluble salt, the particle size of the soluble salt being as large or larger than the desired pore size.

5. The process according to claims 1 to 4, characterized in that the glass and/or the glass ceramic have a smaller or the same particle size as the soluble salt.

6. The process according to claim 5, characterized in that the particle size of the glass and/or the glass ceramic preferable is < 20 μm.

7. The process according to claims 1 to 6, characterized in that the particle size of the soluble salt is predominantly between 1 μm and a few mm, depending from the desired porte size.

8. The process according to claims 1 to 7, characterized in that as the soluble inorganic salts preferably alkali or alkaline earth chlorides, sulfates or carbonates are used.

9. The process according to claims 1 to 8, characterized in that as soluble salts there are used substances which are soluble in aqueous solutions, acids, bases (alkaline solutions) or molten salts.

10. The process according to claims 1 to 9, characterized in that the composition of the glass and/or the glass ceramic and of the soluble salt are chosen such that during the sintering process there takes place no or only little ion exchange between the glass and/or the glass ceramic and the soluble salt.

11. The process according to claims 1 to 10, characterized in that to the mixture of glass and/or glass ceramic and soluble salt there is added a plasticizer, whereafter the whole mixture is kneaded in a kneader, the resulting plastic mass is subjected to shaping and is finally dried before sintering is started.

12. The process according to claim 11, characterized in that shaping is done by press molding, rolling or extruding.

13. The process according to claims 1 to 12, characterized in that two or more mixtures having a different composition ratio of glass and/or glass ceramic to soluble salt, and/or having a different particle size of the soluble salt, are sintered together so as to obtain layered bodies the layers of which differ from each other by different pore volumes and/or pore size.

14. The process according to claims 11 and 12, characterized in that after molding and after drying and before sintering the shaped body is coated with a mass consisting of glass and/or glass ceramic, soluble salt and plasticizer, the coating mass differing from the mass of the shaped body as regards the ratio of glass and/or glass ceramic to soluble salt in the mixture and/or as regards the particle size of the soluble salt.

15. The process according to claim 14, characterized in that coating is done after drying of the shaped bodies and before sintering, by dipping, spraying, spreading or by applying a prefabricated foil.

16. The process according to claims 1 to 15, characterized in that sintering is done under pressure.

## Revendications

1. Procédé pour la fabrication de pièces frittées poreuses ayant une porosité ouverte élevée et des diamètres de pore définis, caractérisé en ce qu'on mélange du verre et/ou une vitrocéramique se présentant sous la forme d'une poudre finement broyée ayant une granulométrie < 50 μm à un sel inorganique bien soluble, lequel présente un point de fusion plus élevé que la température de frittage du verre et/ou de la vitrocéramique et qui se présente sous la forme d'une poudre de granulométrie définie; la composition du verre et/ou de la vitrocéramique et du sel soluble étant choisie de façon qu'il se produise au cours du processus de frittage un intense échange d'ions entre le verre et/ou la vitrocéramique et le sel soluble, et que le mélange de verre et/ou de vitrocéramique et de sel soluble soit chauffé à la température de frittage et soit maintenu à cette température jusqu'au frittage du verre et/ou de la poudre de vitrocéramique, le produit fritté étant ensuite refroidi, et le sel soluble étant extrait du produit fritté en dessous de la température de frittage.

2. Procédé selon la revendication 1, caractérisé en ce que la porosité ouverte est définie par le rapport entre la quantité de poudre de verre et/ou de vitrocéramique et la quantité de poudre de sel soluble, la porosité ouverte, en %-volume, étant toujours supérieure ou égale à la quantité de poudre de sel soluble, exprimée en %-volume.

3. Procédé selon la revendication 2, caractérisé en ce que le rapport entre la quantité de poudre de verre et/ou de vitrocéramique et la quantité de poudre de sel soluble est comprise entre 10:1 et 1:10, de préférence entre 7:3 et 3:7.

4. Procédé selon les revendications 1 à 3, caractérisé en ce que la grosseur des pores dépend du rapport entre la quantité de poudre de verre et/ou de vitrocéramique et de verre soluble, et/ou de la granulométrie du sel soluble, la granulométrie du sel soluble étant supérieure ou égale à la grosseur voulue des pores.

5. Procédé selon les revendications 1 à 4, caractérisé en ce que le verre et/ou la vitrocéramique a une granulométrie inférieure ou égale à celle du sel soluble.

6. Procédé selon la revendication 5, caractérisé en ce que la granulométrie du verre et/ou de la vitrocéramique est de préférence inférieure à 20 µm.

7. Procédé selon les revendications 1 à 6, caractérisé en ce que la grosseur des grains du sel soluble est en majorité comprise entre 1 µm et quelques mm, selon la grosseur voulue des pores.

8. Procédé selon les revendications 1 à 7, caractérisé en ce qu'on utilise comme sels inorganiques solubles de préférence des chlorures, sulfates ou carbonates de métaux alcalins ou alcalino-terreux.

9. Procédé selon les revendications 1 à 8, caractérisé en ce qu'on utilise comme sels solubles des substances qui se dissolvent dans les solutions aqueuses, acides, lessives et sels fondus.

10. Procédé selon les revendications 1 à 9, caractérisé en ce qu'on choisit la composition du verre et/ou de la vitrocéramique et du sel soluble de façon qu'il ne se produise pendant le processus de frittage aucun échange d'ions, ou seulement un faible échange d'ions, entre le verre et/ou la vitrocéramique et le sel soluble.

11. Procédé selon les revendications 1 à 10, caractérisé en ce qu'on ajoute un plastifiant au mélange de verre et/ou de vitrocéramique et de sel soluble, qu'on malaxe la totalité du mélange dans un malaxeur, qu'on soumet la masse plastique obtenue à un moulage puis qu'on sèche avant d'effectuer le frittage.

12. Procédé selon la revendication 11, caractérisé en ce que le moulage s'effectue par compression, laminage ou extrusion.

13. Procédé selon les revendications 1 à 12, caractérisé en ce qu'on fritte ensemble au moins deux mélanges présentant des rapports différents entre le verre et/ou la vitrocéramique et le sel soluble, et/ou qui présente des granulométries différentes du sel soluble, de façon à obtenir des corps stratifiés dans lesquels les couches se distinguent par des porosités différentes et/ou des grosseurs de pores différentes.

14. Procédé selon les revendications 11 et 12, caractérisé en ce, avant le moulage et après le séchage, mais avant le frittage, on revêt la pièce moulée, par enduction, d'une matière constituée de verre et/ou de vitrocéramique, d'un sel soluble et d'un plastifiant, la matière d'enduction se distinguant de la matière de la pièce moulée pour ce qui est du rapport entre le verre et/ou la vitrocéramique et le sel soluble dans le mélange, et/ou pour ce qui est de la granulométrie du sel soluble.

15. Procédé selon la revendication 14, caractérisé en ce que le revêtement a lieu après le séchage des pièces moulées et avant le frittage, par immersion, pulvérisation, enduction ou application d'une feuille préfabriquée.

16. Procédé selon les revendications 1 à 15, caractérisé en ce que le frittage a lieu sous pression.